# EUROPÄISCHE PATENTSCHRIFT

(11) **EP 1 916 416 B1**
(45) Veröffentlichungstag und Bekanntmachung des Hinweises auf die Patenterteilung: **12.10.2011**
(21) Anmeldenummer: 07016695.4
(22) Anmeldetag: 25.08.2007
(51) Int. Cl.: F03D 7/02

(54) **Verfahren zum Betreiben einer Windenergieanlage**
Method of operating a wind turbine
Procédé de fonctionnement d'une éolienne

(30) Priorität: 25.10.2006 DE 102006051352
(43) Veröffentlichungstag der Anmeldung: 30.04.2008
(73) Patentinhaber: Nordex Energy GmbH, 22848 Norderstedt (DE)
(72) Erfinder: Harms, Ulrich, 22399 Hamburg (DE); Schlüter, Detlef, 23562 Lübeck (DE)
(74) Vertreter: Hauck Patent- und Rechtsanwälte

(56) Entgegenhaltungen:
- EP-A1- 1 286 048
- EP-A2- 1 612 414
- DE-A1- 19 739 164
- DE-A1-102005 034 899

## Beschreibung

Die Erfindung betrifft ein Verfahren zur Regelung eines Blattanstellwinkels einer Windenergieanlage.

Eine Regelung des Blattanstellwinkels bei Windenergieanlagen ist bekannt. Dabei wird jedes Rotorblatt um seine Längsachse in seinem Blattanstellwinkel verstellt. Bei unterschiedlichen Blattanstellwinkeln nimmt das Rotorblatt jeweils ein anderes Moment aus dem Wind auf. Besonders wichtig ist die Blattanstellwinkelregelung im Volllastbetrieb, bei dem die Drehzahlregelung des Rotors durch den Blattanstellwinkel erfolgt.

Infolge der fortwährend auftretenden Schwankungen der Windgeschwindigkeit und -richtung wird der Blattanstellwinkel ständig nachgeführt und an einen von der Betriebsführung vorgegebenen Sollwert angepaßt.

Angetrieben wird die Blattverstellung moderner Windenergieanlagen über einen Wechselstrommotor, der über einen Umrichter gesteuert wird. Jedem Rotorblatt kann ein eigener Antrieb zugeordnet sein. Der Motor wirkt über ein Getriebe auf das Rotorblatt. Infolge der häufigen Verstellbewegungen und der großen mechanischen Beanspruchung der Blattlager unterliegen die Komponenten der Blattverstellung einem hohen Verschleiß.

Aus der europäischen Patentanmeldung EP 1 612 414 A2 ist ein Verfahren bekannt geworden, bei dem ein plötzliches Abflauen des Windes oder ein schnelles Verstellen des Blattanstellwinkels anhand des einem Regeleingriff vorausgehenden Verlaufs des Blattanstellwinkels und der Windgeschwindigkeit erkannt wird. Weil auf einen plötzlichen Rückgang der Windgeschwindigkeit häufig ein unvermittelter Anstieg der Windgeschwindigkeit erfolgt, wird in diesen Fällen eine übermäßige Verstellung des Blattanstellwinkels vermieden, indem die Verstellung des Blattanstellwinkels hinsichtlich ihrer Geschwindigkeit oder eines minimalen Blattanstellwinkels begrenzt wird. Dadurch soll die Belastung der Rotorblätter zum Beispiel bei einem auf eine Flaute folgenden Windstoß verringert werden. Auf die Verstellung der Rotorblätter im normalen Betrieb, d.h. bei relativ gleichmäßigen Betriebsbedingungen, die keine außergewöhnlich großen Verstellbewegungen erfordern, hat das Verfahren jedoch keinen Einfluß.

Aus der Druckschrift EP 1 286 048 A1 ist eine Einrichtung zum Verstellen des Rotorblatts eines Rotors einer Windkraftanlage bekannt geworden. Mit dieser Einrichtung können die Rotorblätter aus einer Betriebsposition in die Fahnenstellung gebracht werden, beispielsweise im Falle einer Notabschaltung.
Aus dem Lehrbuch "Windkraftanlagen im Netzbetrieb" von Siegfried Heier, Teubner, Stuttgart 1996, S. 334, ist ein Diagramm zur Struktur einer Regelung einer drehzahlvariabel geführten Windkraftanlage mit Umrichtern bekannt geworden. Dem Diagramm lässt sich entnehmen, dass ein Drehzahlregler oder ein Leistungsregler einen Sollwert für einen Blattanstellwinkel vorgibt. Unterlagerte Regelkreise ermitteln einen Sollwert für eine Verstellgeschwindigkeit. Die bekannte Struktur ist allgemein als Kaskadenregelung bekannt.

Davon ausgehend ist es die Aufgabe der Erfindung, ein Verfahren für die Verstellung eines Blattanstellwinkels anzugeben, das materialschonend ist und die Belastungen der Komponenten der Blattverstellung reduziert.

Die Erfindung beruht auf der Erkenntnis, dass ein von der Betriebsfiihrung vorgegebener Sollwert für den Blattanstellwinkel insbesondere bei kleinen Verstellwegen von den bekannten Blattanstellwinkelregelungen in verbesserungswürdiger Weise eingestellt wird. Üblicherweise wird die Drehzahl eines Antriebsmotors für die Blattwinkelverstellung über den für die Ansteuerung des Motors zuständigen Umrichter eingestellt. Dabei berücksichtigt der Umrichter eine maximal mögliche Verstellgeschwindigkeit, die nicht überschritten wird. Bis zum Erreichen dieser maximalen Verstellgeschwindigkeit wird die Drehzahl des Antriebsmotors mittels einer Rampe kontinuierlich erhöht. Dies führt bei kleinen Abweichungen vom Sollwert dazu, dass die maximal mögliche Blattverstellgeschwindigkeit in der Regel nicht erreicht wird, sondern bereits vor Erreichen dieser Geschwindigkeit die Verstellbewegung wieder abgebremst werden muß. Es kommt daher im Betrieb zu einer schnellen Folge von Beschleunigungs- und Bremsvorgängen der Blattanstellwinkelverstellung.

Die vorstehend genannte Aufgabe der Erfindung wird durch das Verfahren mit den Merkmalen des Patentanspruchs 1 gelöst. Vorteilhafte Ausgestaltungen sind in den Unteransprüchen angegeben.

Das erfindungsgemäße Verfahren dient zum Betreiben einer Windenergieanlage mit einem Rotor mit Rotorblättern, die einen verstellbaren Blattanstellwinkel aufweisen, wobei die Verstellung des Blattanstellwinkels mit einer Verstellgeschwindigkeit und/oder einer Verstellbeschleunigung erfolgt, und wobei die Größe der Verstellgeschwindigkeit und/oder die Größe der Verstellbeschleunigung von einem Sollwert und von einem Istwert des Blattanstellwinkels abhängig ist.

Mit anderen Worten wird in Abhängigkeit von einem Sollwert und einem Istwert des Blattanstellwinkels eine Verstellgeschwindigkeit und/oder eine Verstellbeschleunigung vorgegeben, mit der der Blattanstellwinkel in einem Zeitabschnitt gleichmäßig verstellt wird. Die vorgegebene Verstellgeschwindigkeit oder -beschleunigung kann kleiner oder gleich der maximal möglichen Verstellgeschwindigkeit bzw. -beschleunigung der Blattanstellwinkelverstellung sein.

In einer bevorzugten Ausgestaltung der Erfindung wird die Größe der Verstellgeschwindigkeit und/oder der Verstellbeschleunigung über einen Zeitabschnitt konstant gehalten. Es ergibt sich eine in diesem Zeitabschnitt gleichförmige bzw. gleichmäßig beschleunigte Verstellbewegung.

Die Abhängigkeit der Verstellgeschwindigkeit und/oder -beschleunigung von einem Sollwert und einem Istwert des Blattanstellwinkels ist insbesondere derart ausgeführt, dass sie nach Maßgabe der Differenz zwischen dem Sollwert und dem Istwert des Blattanstellwinkels vorgegeben wird. Die Differenz zwischen dem Sollwert und dem Istwert entspricht einem beabsichtigten Stellweg. Bei kleinen beabsichtigten Verstellwegen ist die vorgegebene Verstellgeschwindigkeit und/oder Verstellbeschleunigung in der Regel deutlich kleiner als die maximal mögliche Verstellgeschwindigkeit bzw. Verstellbeschleunigung.

Durch die Vorgabe einer Verstellgeschwindigkeit wird erreicht, dass die Verstellbewegung des Blattanstellwinkels weitaus gleichmäßiger erfolgt als bei anderen Blattanstellwinkelregelungen. Die Beschleunigungs- und Bremsphasen der Blattverstellung werden verkürzt. Die verwendeten Geschwindigkeiten der Blattverstellung werden verringert. Dadurch werden die mechanischen Beanspruchungen der Blattlager und des Blattverstellantriebs, der unter Umständen mehrere Elektromotoren und Getriebe umfaßt, deutlich reduziert. Es ergibt sich ein deutlich reduzierter Verschleiß.

Weiterhin kann auch die elektrische Belastung der Antriebsmotoren und der für die Ansteuerung verwendeten Umrichter sowie der damit einhergehende Energieverbrauch verringert werden. Durch die weniger ruckartigen Verstellbewegungen reduziert sich auch die mechanische Belastung des Rotorblatts, weil durch die Verstellbewegungen angeregte Schwingungen, insbesondere Torsionsschwingungen des Rotorblatts, vermieden werden.

Alternativ oder zusätzlich kann auch eine Verstellbeschleunigung vorgegeben werden. Dadurch kann die Belastung der Windenergieanlage weiter verringert werden, denn die auftretenden Beschleunigungen können den erforderlichen Verstellwegen bzw. Verstellgeschwindigkeiten angepasst werden.

Die Abhängigkeit der vorgegebenen Verstellgeschwindigkeit und/oder Verstellbeschleunigung von der Differenz zwischen dem Sollwert und dem Istwert kann grundsätzlich anhand einer beliebigen Zuordnung erfolgen, die jeder Differenz zwischen Soll- und Istwert des Blattanstellwinkels eine Verstellgeschwindigkeit und/oder eine Verstellbeschleunigung zuweist. Die Verstellgeschwindigkeit und/oder die Verstellbeschleunigung nimmt dabei unterschiedliche Werte aus einem vorgegebenen Wertebereich an. Beispielsweise kann die Zuordnung einer Winkelfunktion mit einem Sinus- oder Cosinusförmigen Verlauf entsprechen. In einer bevorzugten Ausgestaltung der Erfindung ist die Verstellgeschwindigkeit der Differenz zwischen dem Sollwert und dem Istwert des Blattanstellwinkels bis zu einem Maximalwert der Differenz zwischen dem Sollwert und dem Istwert proportional. Es ist damit eine besonders vorteilhafte Abhängigkeit von der Verstellgeschwindigkeit von dem beabsichtigtem Verstellweg angegeben, weil die pro Zeiteinheit ausgeführte Verstellbewegung in diesem Fall dem beabsichtigtem Verstellweg proportional ist.

Die Vorgabe einer Verstellgeschwindigkeit und/oder einer Verstellbeschleunigung erfolgt in einem festen Zeittakt und die Verstellgeschwindigkeit und/oder Verstellbeschleunigung für ein Zeitintervall wird so gewählt, dass der Istwert des Blattanstellwinkels am Ende des Zeitintervalls den zu Beginn des Zeitintervalls ermittelten Sollwert nicht vollständig erreicht hat. Die Vorgabe der Verstellgeschwindigkeit und/oder der Verstellbeschleunigung erfolgt dabei insbesondere abgestimmt auf den Zeittakt der von der Betriebsführung vorgegebenen Sollwerte des Blattanstellwinkels. Außerdem führt die angegebene Wahl der Verstellgeschwindigkeit und/oder der Verstellbeschleunigung für das jeweilige Zeitintervall dazu, dass die Nachführung des Blattanstellwinkels hin zu dem ermittelten Sollwert schnell genug erfolgt, um den Sollwert innerhalb des betrachteten Zeitintervalls im wesentlichen zu erreichen. Allerdings wird der Sollwert nicht vollständig erreicht, so daß es nicht zu einer abrupten Abremsung der Verstellbewegung vor Ende des Zeitintervalls kommt, sondern die Verstellbewegung am Ende des Zeitintervalls bei Vorgabe des folgenden Sollwerts noch nicht abgeschlossen ist. Dadurch kommt es zu einem fließenden Übergang in die Verstellbewegung des nächsten Zeitintervalls. Es ergibt sich dadurch eine sehr materialschonende Verstellbewegung, die gleichzeitig auch schnellen Schwankungen des Sollwerts zeitnah folgt.

In einer weiteren bevorzugten Ausgestaltung der Erfindung erreicht die Verstellgeschwindigkeit in jedem Zeitintervall in einem ersten Zeitabschnitt eine vorgegebene Verstellgeschwindigkeit, die in einem zweiten Zeitabschnitt bis zum Ende des Zeitintervalls beibehalten wird. Wiederum ist die vorgegebene Verstellgeschwindigkeit so bemessen, dass der Blattanstellwinkel am Ende des Zeitintervalls den zu Beginn des Zeitintervalls ermittelten Sollwert nicht vollständig erreicht hat. Da der Sollwert nicht vollständig erreicht wird, befindet sich das Rotorblatt am Ende des Zeitintervalls, d.h. wenn der nachfolgende Blattanstellwinkel-Sollwert vorgegeben wird, noch in seiner Verstellbewegung. Ausgehend von dieser Verstellgeschwindigkeit wird in dem ersten Zeitabschnitt des nachfolgenden Zeitintervalls unmittelbar die für das nachfolgende Zeitintervall vorgegebene Verstellgeschwindigkeit eingestellt. Es wird dadurch ein unnötiges Abbremsen der Verstellbewegung am Ende eines Zeitintervalls vermieden, was die Beanspruchung der Komponenten der Blattanstellwinkelsteuerung weiter reduziert.

Gemäß einer weiteren Ausgestaltung wird der Blattanstellwinkel in dem ersten Zeitabschnitt mit einer vorgegebenen Verstellbeschleunigung verstellt, die von der Differenz zwischen dem Sollwert und dem Istwert des Blattanstellwinkels abhängig ist. Grundsätzlich kann die für den zweiten Zeitabschnitt vorgegebene Verstellgeschwindigkeit mit einem beliebigen Geschwindigkeitsverlauf während des ersten Zeitabschnitts eingestellt werden. Bevorzugt kommt eine vorgegebene, gleichmäßige Beschleunigung in Betracht. Diese kann beispielsweise einen für alle Zeitintervalle fest vorgegebenen Wert haben. Bevorzugt ist dieser Wert jedoch von der Differenz zwischen dem Sollwert und dem Istwert des Blattanstellwinkels, also dem beabsichtigten Verstellweg, abhängig. Insbesondere ist vorgesehen, kleine vorgegebene Verstellgeschwindigkeiten mit einer geringeren Beschleunigung zu erreichen. Dadurch kann die Beanspruchung des Systems auch während der Beschleunigungsphasen nochmals reduziert werden.

In einer weiteren bevorzugten Ausgestaltung wird die Verstellung des Blattanstellwinkels mittels eines Tiefpassfilters oder eines Verzögerungsglieds erster Ordnung geglättet. Dies führt zu einer weiteren Reduzierung der Veränderungen der Blattanstellwinkelbewegung. Sprunghafte Geschwindigkeitsänderungen werden unterdrückt, wodurch die Beanspruchung des gesamten Systems weiter reduziert wird.

In einer bevorzugten Ausgestaltung der Erfindung wird die Verstellgeschwindigkeit über eine Drehzahl oder Verfahrgeschwindigkeit eines Antriebsmotors für den Blattanstellwinkel vorgegeben. Weil die Drehzahl oder Verfahrgeschwindigkeit des Antriebsmotors von dem für die Bestromung des Antriebsmotors zuständigen Umrichter vorgegeben werden kann, ist eine besonders einfache Kontrolle der Verstellgeschwindigkeit des Blattanstellwinkels gegeben.

Nachfolgend wird die Erfindung anhand von zwei in fünf Figuren dargestellten Ausführungsbeispielen näher erläutert. Es zeigen:
- Fig. 1: ein Diagramm der Abhängigkeit der vorgegebenen Verstellgeschwindigkeit v von der Differenz Δϕ zwischen dem Sollwert und dem Istwert des Blattanstellwinkels bei einem ersten Ausführungsbeispiel der Erfindung,
- Fig. 2: ein Diagramm mit über die Zeit aufgetragenem Verlauf der Verstellgeschwindigkeit v des Blattanstellwinkels nach dem ersten Ausführungsbeispiel der Erfindung und nach dem Stand der Technik,
- Fig. 3: ein Diagramm der Abhängigkeit der vorgegebenen Verstellgeschwindigkeit v von der Differenz Δϕ zwischen dem Sollwert und dem Istwert wert des Blattanstellwinkels in einem anderen Beispiel, das nicht zur Erfindung gehört,
- Fig. 4: ein Diagramm mit über die Zeit aufgetragenem Verlauf der Verstellge- schwindigkeit v des Blattanstellwinkels nach einem zweiten Ausfüh- rungsbeispiel der Erfindung,
- Fig. 5: ein vereinfachtes Blockschaltbild einer Vorrichtung zur Ausführung des erfindungsgemäßen Verfahrens.

Beschrieben wird die Anwendung des erfindungsgemäßen Verfahrens auf eine Windenergieanlage mit einem Rotor, der in ihrem Blattanstellwinkel verstellbare Rotorblätter aufweist.

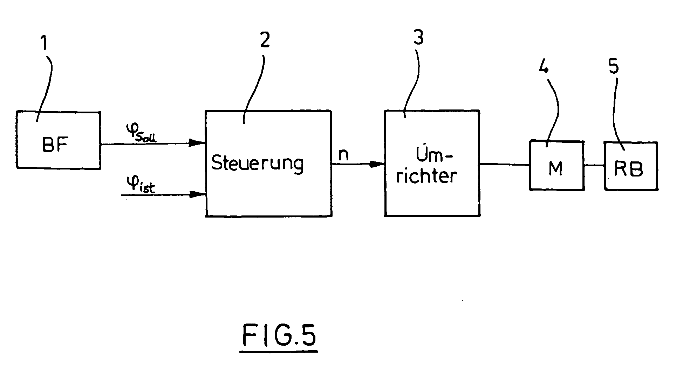

Wie in Figur 5 vereinfacht dargestellt, wird der Blattanstellwinkel eines Rotorblatts 5 (RB) von einem Wechselstrommotor 4 (M), der über ein nicht dargestelltes Getriebe auf eine Verzahnung im Bereich des Blattlagers des Rotorblatts 5 wirkt, angetrieben. Der Wechselstrommotor 4 wird mit Hilfe eines Umrichters 3 gesteuert. Der Umrichter 3 versorgt die Wicklungen des Wechselstrommotors 4 mit Strom und steuert die Drehbewegung des Motors. Zur Steuerung des Umrichters 3 dient eine Steuerung 2, die einen Drehzahlwert n für den Umrichter 3 vorgibt. Die Steuerung 2 ermittelt diesen Drehzahlwert n in Abhängigkeit von einem von der Betriebsführung 1 (BF) vorgegebenen Sollwert ϕₛₒₗₗ und einem Istwert ϕᵢₛₜ des Blattanstellwinkels. Der Istwert ϕᵢₛₜ kann beispielsweise von einem Sensor an dem Rotorblatt erfaßt werden.

Die Steuerung 2 besteht im einfachsten Fall aus einem Proportionalregler, der die Differenz Δϕ zwischen dem Sollwert ϕₛₒₗₗ und dem Istwert ϕᵢₛₜ bestimmt und mit einem geeignetem Faktor multipliziert, um einen der gewünschten Verstellgeschwindigkeit v entsprechenden Drehzahlwert n zu bestimmen.

Im dargestellten Beispiel ist der Umrichter 3 in der Lage, den vorgegebenen Drehzahlwert n durch Abfahren einer Rampe einzustellen. Die Steigung der Rampe, d.h. die Beschleunigung der Drehbewegung, hat dabei einen fest vorgegebenen Wert. Alternativ kann die Steigung der Rampe auch von der Steuerung 2 in Abhängigkeit von φₛₒₗₗ und φᵢₛₜ vorgegeben und an die Größe des Drehzahlwerts n angepaßt werden.

Die Vorgabe des Drehzahlwerts n erfolgt in einem festen Zeittakt, der vorzugsweise mit dem Zeittakt, in dem der Sollwert Øₛₒₗₗ von der Betriebsführung 1 vorgegeben wird, übereinstimmt.

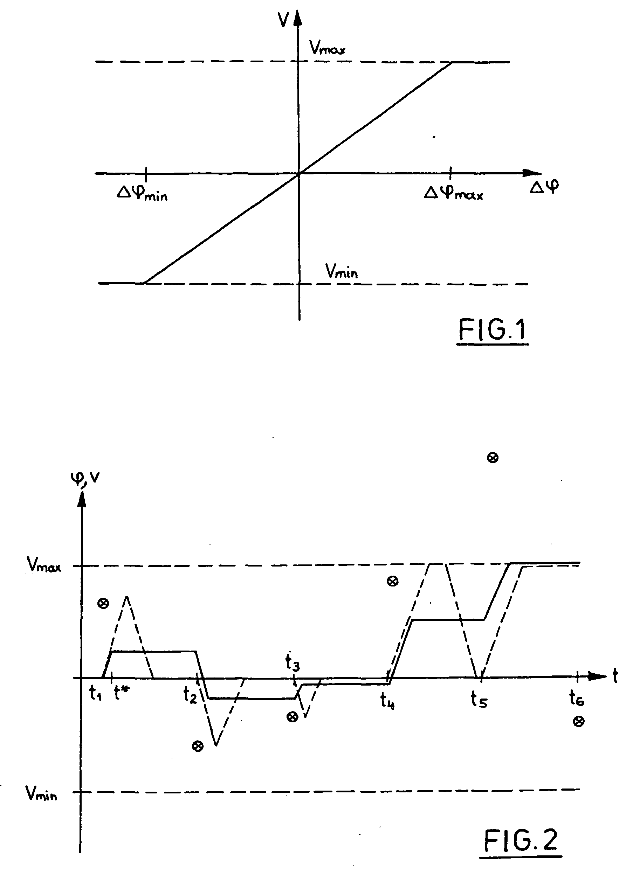

In dem in der Figur 1 dargestellten Diagramm ist auf der Abszisse die Differenz Δϕ zwischen dem Sollwert ϕₛₒₗₗ und dem Istwert Øᵢₛₜ des Blattanstellwinkels aufgetragen. Δϕ repräsentiert somit den zu einem Zeitpunkt beabsichtigten Verstellweg des Blattanstellwinkels. Das Diagramm zeigt die Zuordnung einer auf der Ordinate aufgetragenen Verstellgeschwindigkeit v des Blattanstellwinkels zu Δϕ. Der Zusammenhang ist in diesem ersten Ausführungsbeispiel im Wesentlichen proportional. Erst bei Überschreiten eines Maximalwerts Δϕₘₐₓ oder Unterschreiten eines Minimalwerts Δϕₘᵢₙ wird die Verstellgeschwindigkeit des Blattanstellwinkels auf einen Maximalwert vₘₐₓ bzw. einen Minimalwert vₘᵢₙ begrenzt. vₘᵢₙ und vₘₐₓ ergeben sich aus den maximal möglichen bzw. sinnvollen Verstellgeschwindigkeiten des Blattanstellwinkels in positiver und negativer Richtung.

Durch die feste Kopplung zwischen dem Wechselstrommotor und dem Rotorblatt entspricht jede Verstellgeschwindigkeit einer bestimmten Drehzahl des Wechselstrommotors. Die maximal mögliche Verstellgeschwindigkeit des Rotorblatts vₘₐₓ kann beispielsweise einen Wert von 6°/s bis 12°/s haben und einem bestimmten Drehzahlwert entsprechen. Die Umrechnung von einem in Abhängigkeit von Δϕ vorzugebenden Geschwindigkeitswert v in einen Drehzahlwert n erfolgt durch Anwendung eines entsprechenden Faktors innerhalb der in Figur 5 dargestellten Steuerung 2.

In Figur 2 ist die Wirkung des erfindungsgemäßen Verfahrens auf die Verstellgeschwindigkeit v eines Rotorblatts beispielhaft über die Zeit aufgetragen. Dargestellt sind fünf Zeitintervalle zwischen den Zeitpunkten t₁ und t₆. Die durchgezogene Linie gibt den Verlauf der Verstellgeschwindigkeit v bei Anwendung des erfindungsgemäßen Verfahrens wieder. Gestrichelt dargestellt ist der Verlauf der Verstellgeschwindigkeit nach dem Stand der Technik. Die zu den Zeitpunkten t₁ bis t₆ als eingekreiste Kreuze dargestellten Punkte bezeichnen die zu den jeweiligen Zeitpunkten aus Øₛₒₗₗ und Øᵢₛₜ ermittelten Differenzen Δϕ, die den beabsichtigten Verstellweg des Blattanstellwinkels beschreiben.

Beide Verlaufskurven der Verstellgeschwindigkeit verlaufen innerhalb des von der minimalen und maximalen Verstellgeschwindigkeit Vₘᵢₙ bzw. Vₘₐₓ vorgegebenen Bandes.

Zunächst wird der Verlauf der Verstellgeschwindigkeit bei Anwendung des erfindungsgemäßen Verfahrens beschrieben. Der zum Zeitpunkt t₁ dargestellte Wert von Δϕ beträgt im Beispiel 0,25°. Ausgehend von diesem beabsichtigten Verstellweg berechnet die Steuerung eine Verstellgeschwindigkeit v von 1,5° pro Sekunde. Diese Geschwindigkeit wird dem Umrichter zum Zeitpunkt t₁ vorgegeben und von diesem in einem ersten Zeitabschnitt des zwischen t₁ und t₂ liegenden Zeitintervalls auf einer Rampe mit gleichmäßiger Steigung angefahren. Der Endzeitpunkt der Rampe ist in der Figur 2 mit t* bezeichnet. Die zum Zeitpunkt t* erreichte Verstellgeschwindigkeit v wird bis zum Zeitpunkt t₂ konstant gehalten, wie im Diagramm als durchgezogene, waagerechte Linie dargestellt. Der konstanten Verstellgeschwindigkeit v entspricht dabei wiederum ein fester Drehzahlwert n des Wechselstrommotors.

Zum Zeitpunkt t₂ beträgt die ermittelte Differenz Δϕ im dargestellten Beispiel - 0,2°. Daraus ermittelt die Steuerung eine neue Vorgabe für die Verstellgeschwindigkeit v von - 1,2° pro Sekunde. Dieser neue Geschwindigkeitswert wird von dem Umrichter auf einer gleichmäßig abfallenden Rampe ausgehend von dem zuvor eingestellten Geschwindigkeitswert angefahren und anschließend bis zum Zeitpunkt t₃ konstant gehalten.

Zum Zeitpunkt t₃ beträgt der Wert von Δϕ im Beispiel - 0,1 °. Der Umrichter fährt daraufhin den von der Steuerung ermittelten Geschwindigkeitswert von v = - 0,6° pro Sekunde an und hält diesen bis zum Zeitpunkt t₄ konstant.

Zum Zeitpunkt t₄ ergibt sich aus einem ermittelten Δϕ von 0,5° eine größere von der Steuerung vorgegebene Verstellgeschwindigkeit v von 3° pro Sekunde, die auf einer gleichmäßig ansteigenden Rampe angefahren und bis zum Zeitpunkt t₅ beibehalten wird.

Zum Zeitpunkt t₅ wird ein Δϕ von 1,2° ermittelt. Dieser Wert liegt oberhalb des in Figur 1 eingetragenen maximalen Werts Δϕₘₐₓ. Daher wird der von der Steuerung vorgegebene Geschwindigkeitswert v zu diesem Zeitpunkt auf den maximalen Wert vₘₐₓ, der im Beispiel 6°/s beträgt, begrenzt. Dieser maximale Wert wird auf einer gleichmäßig ansteigenden Rampe angefahren und bis zum Ende des Zeitintervalls bei t₆ beibehalten.

Die beschriebene, durchgezogen dargestellte Kurve in Figur 2 weist in jedem der fünf dargestellten Zeitintervalle einen ersten Zeitabschnitt mit gleichmäßigem Ansteigen bzw. Absinken der Geschwindigkeit und einen zweiten Zeitabschnitt mit konstanter Verstellgeschwindigkeit auf. Die Verstellgeschwindigkeit wird daher in jedem Zeitintervall nur einmal durch Beschleunigen bzw. Abbremsen verändert. Die auftretenden maximalen Verstellgeschwindigkeiten sind relativ klein, da sie so gewählt sind, dass in jedem Zeitintervall der vorgegebene Sollwert Øₛₒₗₗ des Blattanstellwinkels am Ende des Zeitintervalls nicht vollständig erreicht wird. Es ergibt sich ein besonders materialschonendes und energiesparendes Verstellen des Blattanstellwinkels. Zusätzlich zu dem daraus resultierenden verringerten Verschleiß der mechanischen Komponenten wird auch die elektrische Leistung und Belastung des Umrichters und des Wechselstrommotors verringert, sodass Energieverbrauch und Wärmeentwicklung reduziert werden können.

Diesem vorteilhaften Bewegungsverlauf wird nachfolgend der Verlauf der Blattverstellung bei Verwendung eines Verfahrens nach dem Stand der Technik gegenübergestellt. Der Verlauf ist in der Figur 2 als gestrichelte Linie dargestellt.

Bei den bekannten Verfahren wird zunächst zum Zeitpunkt t₁ ebenfalls der aus der Differenz zwischen Soll- und Istwert Øₛₒₗₗ und Øᵢₛₜ des Blattanstellwinkels ermittelte beabsichtigte Verstellweg Δϕ berechnet. Die berechnete Blattwinkelverstellung wird dem Umrichter im Wesentlichen durch einen Start-und einen Stopbefehl für die Verstellbewegung mitgeteilt. Es erfolgt jedoch keine Vorgabe eines bestimmten, von Øᵢₛₜ oder Øₛₒₗₗ abhängigen Geschwindigkeitswerts v. Daher fährt der Umrichter die Verstellgeschwindigkeit so lange entlang einer fest vorgegebenen Rampe hoch, bis er den Stopbefehl erhält. Auf die Beschleunigungsphase erfolgt daher unmittelbar ein Abbremsen der Verstellbewegung, wenn der beabsichtigte Verstellweg Δϕ bereits vor Erreichen der maximal möglichen Verstellgeschwindigkeit vₘₐₓ bzw. vₘᵢₙ erreicht wird. Im dargestellten Beispiel gilt dies für sämtliche Zeitintervalle zwischen t₁ und t₄.

Sofern Δϕ relativ große Werte annimmt, wie beispielsweise zum Zeitpunkt t₄, wird der maximale Wert vₘₐₓ für die Verstellgeschwindigkeit auch bei den bekannten Verfahren erreicht und für eine gewisse Zeit beibehalten. Dies kommt in dem waagerechten Abschnitt der gestrichelten Linie in dem Zeitintervall zwischen t₄ und t₅ zum Ausdruck. Sobald der Verstellweg Δϕ erreicht ist, wird die Blattverstellung jedoch sofort wieder abgebremst. Bei sehr großen Werten von Δϕ, wie beispielsweise zum Zeitpunkt t₅, kann es auch vorkommen, dass der beabsichtigte Verstellweg überhaupt nicht innerhalb des entsprechenden Zeitintervalls erreicht wird und somit eine Verstellung mit der maximal möglichen Geschwindigkeit Vₘₐₓ bis zum Ende des Zeitintervalls erfolgt. Im Unterschied zur Erfindung ist jedoch auch in diesem Fall die konstante Verstellgeschwindigkeit nicht von dem Wert von Δϕ abhängig, sondern bestimmt sich allein aus einem vorgegebenen Maximalwert der Verstellgeschwindigkeit Vₘₐₓ.

Wie ein Vergleich der beiden in Figur 2 dargestellten Kurven unmittelbar zeigt, sind nach dem Stand der Technik insbesondere bei kleinen Verstellwegen Δϕ mehr Beschleunigungs- und Abbremsvorgänge erforderlich, und die Spitzenwerte der auftretenden Verstellgeschwindigkeiten liegen wesentlich höher als bei dem Verfahren nach der Erfindung. Es kommt dadurch zu einem höheren Verschleiß sämtlicher mechanischer Komponenten und einer höheren elektrischen Belastung des Umrichters und des Motors.

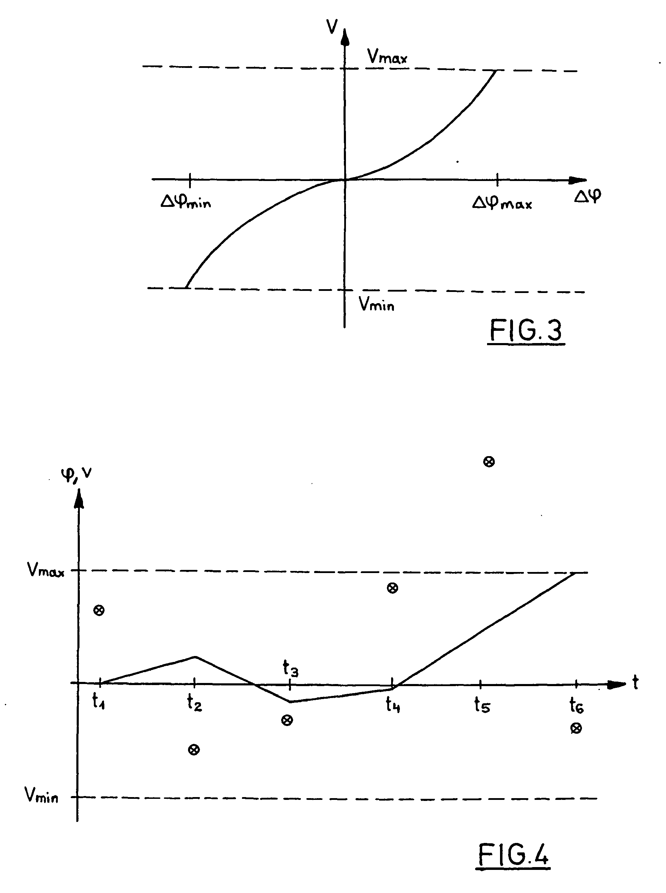

In Figur 4 ist ein weiteres Ausführungsbeispiel der Erfindung illustriert. Die Darstellung des Diagramms ähnelt den entsprechenden Figuren 1 und 2 des ersten Ausführungsbeispiels.

Die Zuordnung der vorgegebenen Verstellgeschwindigkeit v zur Differenz Δϕ zwischen Istwert und Sollwert des Blattanstellwinkels weicht von dem proportionalen Verlauf der Figur 1 ab. Die Kurve zeigt eine annähernd quadratische Abhängigkeit. Die Steigung der Kurve ist im Bereich kleiner Differenzen geringer als bei höheren Differenzen. Dadurch wird insbesondere bei kleinen Abweichungen des Blattanstellwinkels vom Sollwert ein verlangsamtes Verstellen des Blattanstellwinkels erreicht. Dies ist vor allem bei mit Rauschen behafteten Eingangsgrößen, insbesondere beim Sollwert des Blattanstellwinkels, vorteilhaft.

Die in Fig. 3 dargestellte Abhängigkeit der Verstellgeschwindigkeit kann sowohl in Ausführungen mit vorgegebener Verstellgeschwindigkeit als auch in Ausführungen mit vorgegebener Verstellbeschleunigung oder einer Kombination aus beiden eingesetzt werden.

Die Fig. 4 zeigt ein Ausführungsbeispiel der Erfindung, bei dem in jedem Zeitintervall eine Verstellbeschleunigung vorgegeben wird. Die Verstellbeschleunigung wird jeweils aus der Differenz zweier aufeinanderfolgender Verstellgeschwindigkeiten ermittelt und so gewählt, dass am Ende eines Zeitintervalls der ermittelte Sollwert des Blattanstellwinkels noch nicht vollständig erreicht wird. Der Beschleunigungsvorgang aufgrund der vorgegebenen, während des Zeitintervalls konstanten Verstellbeschleunigung geht daher unmittelbar in den Beschleunigungsvorgang des nächsten Zeitintervalls über, und so fort. In diesem Fall wird die Verstellgeschwindigkeit laufend angepaßt.

Auch bei Vorgabe der Beschleunigungen, die aus den ermittelten Verstellgeschwindigkeiten berechnet werden, hängt der vorgegebene Wert vom Sollwert und vom Istwert des Blattanstellwinkels ab, die zur Ermittlung der Verstellgeschwindigkeiten herangezogen werden.

## Patentansprüche

1. Verfahren zum Betreiben einer Windenergieanlage mit einem Rotor mit Rotorblättern, die einen verstellbaren Blattanstellwinkel aufweisen, wobei sich die Windenergieanlage im Volllastbetrieb befindet, in dem die Drehzahlregelung des Rotors durch Vorgeben eines Sollwerts für den Blattanstellwinkel erfolgt, und die Verstellung des Blattanstellwinkels mit einer Verstellgeschwindigkeit und/oder einer Verstellbeschleunigung erfolgt, wobei die Größe der Verstellgeschwindigkeit und/oder die Größe der Verstellbeschleunigung von einem Sollwert und von einem Istwert des Blattanstellwinkels abhängig ist, **dadurch gekennzeichnet, dass** die Vorgabe der Verstellgeschwindigkeit und/oder der Verstellbeschleunigung in einem festen Zeittakt erfolgt, in dem die Sollwerte für den Blattanstellwinkel von einer Betriebsfiihrung vorgegeben werden, und die Verstellgeschwindigkeit und/oder die Verstellbeschleunigung für ein Zeitintervall so gewählt wird, dass der Istwert des Blattanstellwinkels am Ende des Zeitintervalls den zu Beginn des Zeitintervalls ermittelten Sollwert im Wesentlichen, aber nicht vollständig erreicht hat, so dass es nicht zu einer abrupten Abbremsung der Verstellbewegung vor Ende des Zeitintervalls kommt, sondern die Verstellbewegung am Ende des Zeitintervalls noch nicht abgeschlossen ist.

2. Verfahren nach Anspruch 1, **dadurch gekennzeichnet, dass** die Verstellgeschwindigkeit und/oder die Verstellbeschleunigung über einen Zeitabschnitt konstant gehalten wird.

3. Verfahren nach Anspruch 1 oder 2, **dadurch gekennzeichnet, dass** die Verstellgeschwindigkeit und/oder die Verstellbeschleunigung von der Differenz zwischen dem Sollwert und dem Istwert des Blattanstellwinkels abhängig ist.

4. Verfahren nach einem der Ansprüche 1 bis 3, **dadurch gekennzeichnet, dass** die Verstellgeschwindigkeit und/oder die Verstellbeschleunigung der Differenz zwischen dem Sollwert und dem Istwert des Blattanstellwinkels bis zu einem Maximalwert der Differenz zwischen dem Sollwert und dem Istwert proportional ist.

5. Verfahren nach einem der Ansprüche 1 bis 4, **dadurch gekennzeichnet, dass** die Verstellgeschwindigkeit in jedem Zeitintervall in einem ersten Zeitabschnitt eine vorgegebene Verstellgeschwindigkeit erreicht, die in einem zweiten Zeitabschnitt bis zum Ende des Zeitintervalls beibehalten wird.

6. Verfahren nach einem der Ansprüche 1 bis 5, **dadurch gekennzeichnet, dass** der Blattanstellwinkel in dem ersten Zeitabschnitt mit einer vorgegebenen Beschleunigung verstellt wird, die von der Differenz zwischen dem Sollwert und dem Istwert des Blattanstellwinkels abhängig ist.

7. Verfahren nach einem der Ansprüche 1 bis 6, **dadurch gekennzeichnet, dass** die Verstellung des Blattanstellwinkels mittels eines Tiefpassfilters oder eines Verzögerungsglieds erster Ordnung geglättet wird.

8. Verfahren nach einem der Ansprüche 1 bis 7, **dadurch gekennzeichnet, dass** die Verstellgeschwindigkeit und/oder die Verstellbeschleunigung für den Blattanstellwinkel über eine Drehzahl oder Verfahrgeschwindigkeit eines Antriebsmotors bzw. über deren Änderung vorgegeben wird.

## Claims

1. Method for operating a wind energy plant with a rotor having rotor blades which have an adjustable blade pitch, wherein the wind energy plant is in full load operation in which the control of the rotational speed of the rotor takes place by presetting a desired value for the blade pitch, and the adjustment of the blade pitch takes place by an adjustment velocity and/or an adjustment acceleration, wherein the magnitude of the adjustment velocity and/or the magnitude of the adjustment acceleration depends on a desired value and an actual value of the blade pitch, **characterized in that** the presetting of the adjustment velocity and/or of the adjustment acceleration takes place in a fixed clock cycle, in which the desired values for the blade pitch are preset, and the adjustment velocity and/or the adjustment acceleration is selected for a time interval such that at the end of the time interval, the actual value of the blade pitch has essentially but not completely reached the desired value acquired at the beginning of the time interval so that no sudden braking of the adjustment movement takes place before the end of the time interval, but instead the adjustment movement is not yet completed at the end of the time interval.

2. Method according to claim 1, **characterized in that** the adjustment velocity and/or of the adjustment acceleration is/are kept constant for a period of time.

3. Method according to claim 1 or 2, **characterized in that** the adjustment velocity and/or of the adjustment acceleration depends on the difference between the desired value and the actual value of the blade pitch.

4. Method according to any one of claims 1 to 3, **characterized in that** the adjustment velocity and/or of the adjustment acceleration is proportional to the difference between the desired value and the actual value of the blade pitch up to a maximum value of the difference between the desired value and the actual value.

5. Method according to any one of claims 1 to 4, **characterized in that** in every time interval, the adjustment velocity reaches a preset adjustment velocity in a first period of time, which is maintained in a second period of time up to the end of the time interval.

6. Method according to any one of claims 1 to 5, **characterized in that** the blade pitch is adjusted with a preset acceleration in the first period of time, which depends on the difference between the desired value and the actual value of the blade pitch.

7. Method according to any one of claims 1 to 6, **characterized in that** the adjustment of the blade pitch is smoothed by means of a low-pass filter or of a first order delay element.

8. Method according to any one of claims 1 to 7, **characterized in that** the adjustment velocity and/or the adjustment acceleration for the blade pitch is preset via a rotational speed or a movement speed of a drive motor or the change thereof, respectively.

## Revendications

1. Procédé de fonctionnement d'une éolienne comprenant un rotor avec des pales de rotor, qui présentent un angle de calage de pale réglable, l'éolienne se trouvant en régime à pleine charge dans lequel la régulation de la vitesse du rotor est effectuée par la spécification d'une valeur de consigne pour l'angle de calage de pale, et le réglage de l'angle de calage de pale est effectué avec une vitesse de réglage et/ou une accélération de réglage, la grandeur de la vitesse de réglage et/ou la grandeur de l'accélération de réglage dépendant d'une valeur de consigne et d'une valeur réelle de l'angle de calage de pale, **caractérisé en ce que** la spécification de la vitesse de réglage et/ou de l'accélération de réglage est effectuée à un rythme fixe, dans lequel les valeurs de consigne pour l'angle de calage de pale sont spécifiées par une gestion du fonctionnement, et la vitesse de réglage et/ou l'accélération de réglage est sélectionnée pour un intervalle de temps de sorte que la valeur réelle de l'angle de calage de pale à la fin de l'intervalle de temps a atteint substantiellement, mais pas totalement, la valeur de consigne déterminée au début de l'intervalle de temps, de sorte qu'il n'y a pas de freinage brusque du mouvement de réglage avant la fin de l'intervalle de temps, mais le mouvement de réglage n'est pas encore achevé à la fin de l'intervalle de temps.

2. Procédé selon la revendication 1, **caractérisé en ce que** la vitesse de réglage et/ou l'accélération de réglage est maintenue constante sur une section de temps.

3. Procédé selon la revendication 1 ou 2, **caractérisé en ce que** la vitesse de réglage et/ou l'accélération de réglage dépend de la différence entre la valeur de consigne et la valeur réelle de l'angle de calage de pale.

4. Procédé selon l'une des revendications 1 à 3, **caractérisé en ce que** la vitesse de réglage et/ou l'accélération de réglage est proportionnelle à la différence entre la valeur de consigne et la valeur réelle de l'angle de calage de pale jusqu'à une valeur maximale de la différence entre la valeur de consigne et la valeur réelle.

5. Procédé selon l'une des revendications 1 à 4, **caractérisé en ce que** la vitesse de réglage dans chaque intervalle de temps atteint dans une première section de temps une vitesse de réglage spécifiée, qui est maintenue dans une seconde section de temps jusqu'à la fin de l'intervalle de temps.

6. Procédé selon l'une des revendications 1 à 5, **caractérisé en ce que** l'angle de calage de pale dans la première section de temps est réglé avec une accélération spécifiée, qui dépend de la différence entre la valeur de consigne et la valeur réelle de l'angle de calage de pale.

7. Procédé selon l'une des revendications 1 à 6, **caractérisé en ce que** le réglage de l'angle de calage de pale est lissé au moyen d'un filtre passe-bas ou d'un élément de temporisation de premier ordre.

8. Procédé selon l'une des revendications 1 à 7, **caractérisé en ce que** la vitesse de réglage et/ou l'accélération de réglage pour l'angle de calage de pale est spécifiée via un régime ou une vitesse d'avance d'un moteur d'entraînement et/ou via le changement de ceux-ci.
